# EUROPÄISCHE PATENTSCHRIFT

(11) **EP 2 377 666 B1**
(45) Veröffentlichungstag und Bekanntmachung des Hinweises auf die Patenterteilung: **24.10.2012**
(21) Anmeldenummer: 11002334.8
(22) Anmeldetag: 22.03.2011
(51) Int. Cl.: B29C 45/17

(54) **Verfahren und Vorrichtung zum Spritzgiessen eines Formteils**
Method and device for injection moulding a moulded part
Procédé et dispositif destinés au moulage par injection d'une pièce de formage

(30) Priorität: 17.04.2010 DE 102010015452
(43) Veröffentlichungstag der Anmeldung: 19.10.2011
(73) Patentinhaber: Wittmann Battenfeld GmbH, 2542 Kottingbrunn (AT)
(72) Erfinder: Eckardt, Helmut, 58540 Meinerzhagen (DE)
(74) Vertreter: Gosdin, Michael

(56) Entgegenhaltungen:
- EP-A1- 0 757 936
- EP-A1- 2 226 176
- "Möglichkeiten und Grenzen der Projektilinjektionstechnik", IKV FACHTAGUNG GAS- UND WASSERINJEKTIONSTECHNIK POTENZIALE NUTZEN, HERAUSFORDERUNGEN MEISTERN,, 28. November 2007 (2007-11-28), Seiten 1-7, XP007905530,

## Beschreibung

Die Erfindung betrifft ein Verfahren zum Spritzgießen eines Formteils, das mindestens zwei im Außendurchmesser unterschiedliche Abschnitte aufweist, wobei ein sich im Inneren des Formteils befindlicher Hohlraum erzeugt wird, indem ein Projektil in Richtung einer Längsachse des Formteils durch das noch schmelzflüssige spritzgießfähige Material in eine Förderrichtung getrieben wird, wozu im sich in Förderrichtung hinter dem Projektil befindlichen Hohlraum ein Druckfluid aufgegeben wird, das das Projektil in Förderrichtung vorantreibt. Des weiteren betrifft die Erfindung eine Vorrichtung zum Spritzgießen eines Formteils.

Die Herstellung hohler, spritzgegossener Formteile ist hinlänglich im Stand der Technik beschrieben. Hierbei kann das Gasinnendruckverfahren oder das Wasserinnendruckverfahren vorteilhaft zum Einsatz kommen. Eine ebenfalls vorteilhafte und an sich vorbekante Technologie ist die Projektilinjektions-Technik der gattungsgemäßen Art. Diese Technologie ist beispielsweise aus der EP 0 757 936 B1 bekannt. Hier ist beschrieben, beim Spritzgießen eines Kunststoff-Formteils ein Projektil an einem ersten Längsende einer Spritzgießkavität in eine Projektilaufnahme des Formwerkzeugs einzulegen und durch ein unter Druck stehendes Fluid durch die mit noch teilweise fließfähigem Kunststoff gefüllte Kavität hindurch in eine am anderen, zweiten Längsende der Kavität gelegene Nebenkavität zu treiben.

Damit kann in vorteilhafter Weise erreicht werden, in der Kavität ein hohles, rohrförmiges Bauteil zu erzeugen. Zu diesem Zweck führt eine Zuführleitung zur Zuführung von unter Druck stehendem Fluid zu der Projektilaufnahme, wo das unter Druck stehende Fluid bei entsprechender Strömungsfreigabe auf das Projektil antreibend einwirken kann. Eine ähnliche Lösung wird in der DE 10 2008 023 473 A1 beschrieben.

Die Projektilinjektionstechnologie ist auch in der EP 2 226 176 A1, in der EP 0 757 936 A 1 und im Beitrag "Möglichkeiten und Grenzen der Projektilinjektonstechnik", IKV Fachtagung Gas- und Wasserinjektionstechnik, Potenziale Nutzen, Herausforderungen meistern, 28. November 2007, Seiten 1 bis 7, beschrieben.

Von Vorteil ist hierbei insbesondere, dass mit den vorbekannten Vorrichtungen bzw. Verfahren bereits rohrförmige Kunststoff-Formkörper hergestellt werden können, die sich durch eine sehr gleichmäßige Wanddicke auszeichnen. Diesbezüglich wird ein besseres Ergebnis erzielt, als es mit dem klassischen Gasinnendruckspritzgießen möglich ist. Dieses Verfahren kann grundsätzlich mit beliebigen Fluiden (Gas und Flüssigkeit) betrieben werden.

Mit der Projektilinjektions-Technik in Verbindung mit der Fluidinjektionstechnik können also beispielsweise Medienleitungen unterschiedlicher Größen und Durchmesser bei gleichbleibendem Außendurchmesser mit gleichmäßigen und geringen Wanddicken bei guter Oberfläche hergestellt werden. Das Verfahren kann unter Verwendung von beispielsweise Gas oder Wasser als Fluid erfolgreich für Medienleitungen eingesetzt werden. Dabei werden bevorzugt Projektile aus Kunststoff verwendet, die aus dem gleichen oder einem anderen Kunststoff als die Medienleitung bestehen können. Das Projektil verbleibt üblicherweise in einem Abschnitt der Medienleitung, der anschließend abgetrennt wird.

Einschränkungen sind jedoch zu machen, wenn die äußeren Abmessungen des Formteils, in dessen Innerem ein Hohlraum zu erzeugen ist, variabel sind. Der Hohlraum im Inneren bleibt zwar im Durchmesser konstant, da das vorangetriebene Projektil einen Hohlraum mit konstantem Durchmesser hinterlässt. Bei Veränderung der äußeren Abmessungen verändert sich demgemäß die Wanddicke des Formteils entsprechend, was unter verschiedenen Aspekten nachteilig ist. Zum einen wird mehr Kunststoff für das Formteil benötigt, als wenn die Wandstärke konstant bliebe. Die unterschiedlichen Wandstärken, d. h. Masseanhäufungen, führen auch zu einem unterschiedlichem Abkühlverhalten der Bereiche des Formteils nach dem Spritzen.

Es werden immer mehr Medienleitungen benötigt, die über die Formteillänge veränderliche Außendurchmesser haben. Demgemäß ergibt sich bei den vorbekannten Verfahrensweisen in diesem Falle bei gleichem Innendurchmesser des Projektils eine größere Wanddicke in den Bereichen, die einen größeren Außendurchmesser aufweisen. Dies führt zu den genannten Einschränkungen beim Einsatz des gattungsgemäßen Verfahrens.

Der Erfindung liegt daher die **Aufgabe** zugrunde, ein Verfahren und eine Vorrichtung der eingangs genannten Art so fortzubilden, dass die genannten Nachteile bzw. Beschränkungen beim Einsatz der Projektilinjektions-Technik vermieden werden können. Es soll also möglich werden, auch Formteile mit sich veränderndem Außendurchmesser mit möglichst gleichmäßiger Wanddicke herzustellen.

Die **Lösung** dieser Aufgabe durch die Erfindung ist verfahrensgemäß dadurch gekennzeichnet, dass ein Projektil verwendet wird, das zumindest einen elastischen oder plastischen Abschnitt aufweist, der von einem Raum begrenzt wird, in den das Druckfluid beim Vorantreiben des Projektils eintreten kann, wobei sich das Volumen des Raums und damit der wirksame Außendurchmesser des Projektils in Abhängigkeit des Fluiddrucks verändern kann, wobei der Druck des Druckfluids und/oder der Druck der Schmelze oder eine von den Drücken abhängige Prozessgröße so gesteuert oder geregelt werden, dass sich der Raum und damit der wirksame Außendurchmesser des Projektils so vergrößert und/oder verringert, dass der wirksame Außendurchmesser des Projektils über dem Vorschubweg in Förderrichtung zumindest abschnittsweise einen vorgegebenen Wert annimmt.

Der Druck des Druckfluids bzw. der Schmelze oder eine vom Druck abhängige Prozessgröße werden dabei bevorzugt so gesteuert oder geregelt, dass die Wanddicke des Formteils über der Längsachse des Formteils einen vorgegebenen Verlauf hat. Insbesondere kann vorgesehen werden, dass der Druck des Druckfluids bzw. der Schmelze oder eine vom Druck abhängige Prozessgröße so gesteuert oder geregelt werden, dass die Wanddicke des Formteils über der Längsachse des Formteils konstant ist.

Da erfindungsgemäß die Veränderung der Form des Projektils und damit die Veränderung des wirksamen Außendurchmessers desselben angestrebt wird, ist es klar, dass unter Veränderung des Drucks des Druckfluids bzw. der Schmelze oder einer vom Druck abhängigen Prozessgröße insbesondere zu verstehen ist, dass das Druckverhältnis zwischen dem Fluiddruck und dem Schmelzedruck während des Spritzgießens ein wesentlicher Einflussparameter ist. Demgemäß kann insbesondere auch durch Vorgabe des Drucks des Druckfluids und des Schmelzeeinspritzdrucks während der Füllphase des Spritzgießprozesses wirksam auf die Größe und namentlich auf den Außendurchmesser des Projektils Einfluss genommen werden.

Je nach Forrnteilkontur kann es daher vorteilhaft sein, den Massedruck auf die Schmelze durch entsprechende Hilfsmittel bzw. Maßnahmen zu beeinflussen. Hierbei ist beispielsweise an die Aufbringung eines Gegendrucks auf die Schmelze beim Einspritzen gedacht, so dass sich der gewünschte Außendurchmesser des Projektils einstellt.

Die vorgeschlagene Vorrichtung zum Spritzgießen eines Formteils, das mindestens zwei im Außendurchmesser unterschiedliche Abschnitte aufweist, wobei sich im Inneren des Formteils ein Hohlraum befindet, hat ein mindestens zweiteiliges Spritzgießwerkzeug sowie mindestens eine Einspritzdüse für ein Druckfluid in die Kavität des Spritzgießwerkzeugs, wobei die Vorrichtung mindestens ein auf die Einspritzdüse aufsetzbares Projektil umfasst, das durch Aufgabe des Druckfluids durch die sich in der Kavität des Spritzgießwerkzeugs befindliche Schmelze bewegt werden kann. Die erfindungsgemäße Vorrichtung zeichnet sich dadurch aus, dass das Projektil einen in Förderrichtung vorne liegenden Kopfbereich und einen in Förderrichtung hinten liegenden im Volumen veränderlichen Raum aufweist, wobei der Raum fluidisch mit dem Hohlraum in Verbindung steht.

Demgemäß wirken Druckveränderungen des Druckfluids auf das Volumen vergrößernd bzw. verkleinernd ein.

Gemäß einer möglichen Ausgestaltung der Erfindung wird der Raum durch einen dünnwandigen, blasenartig aufweitbaren Körper begrenzt.

Vorgesehen kann aber auch werden, dass der Raum zumindest teilweise durch eine Anzahl lamellenartig ausgebildeter Streifen begrenzt wird. Die lamellenartigen Streifen können zur Förderrichtung unter einem Winkel angeordnet sein.

Weiterhin hat sich eine Lösung bewährt, bei der der Raum durch einen dünnwandigen, blasenartig aufweitbaren Körper begrenzt wird, wobei auf der Außenseite des Körpers eine Anzahl lamellenartig ausgebildeter Streifen angeordnet sind.

Die lamellenartigen Streifen können durch einen mechanischen Fertigungsvorgang, insbesondere durch einen Schneidevorgang, erzeugt sein.

Das Projektil ist bevorzugt als Kunststoff-Spritzgießteil hergestellt, wobei es insbesondere aus thermoplastischem Elastomer (TPE), aus Polypropylen (PP), aus Polyethylen (PE) oder aus Polyamid (PA) besteht.

Der Grundgedanke des vorgeschlagenen Konzepts stellt also darauf ab, dass ein Projektil verwendet wird, das mindestens in einem Bereich seines Außenumfangs bzw. -durchmessers eine Durchmesserveränderung erfahren kann. Dies wird durch gezielte geometrische Gestaltung des Projektils erreicht. Das Material für das Projektil wird hierzu entsprechend gewählt. Die Veränderung des Außendurchmessers des Projektils kann durch Steuerung bzw. Regelung des Drucks bzw. eines mit diesem in Verbindung stehenden Prozessparameter (z. B. Fluidvolumen, Füllzeit, Füllgeschwindigkeit, Schmelzetemperatur) erfolgen.

Die vorgeschlagene Verfahrensweise und die zugehörige Vorrichtung ermöglichen somit, Formteile durch Spritzgießen zu fertigen, die trotz variabler Außendurchmesser eine weitgehend konstante Wandstärke aufweisen. Der Außendurchmesser des Projektils kann erfindungsgemäß dem Außendurchmesser des Formteils, z. B. der Medienleitung, anpasst werden, weshalb die Wanddicke des Formteils über die gesamte Längsachse konstant gehalten werden kann.

Zum Einsatz kommt ein Projektil, das seinen Außendurchmesser druckabhängig verändern kann. Dies wird dadurch ermöglicht, dass das Projektil durch seine geometrische Gestaltung im Außendurchmesser wachsen oder auch wieder abnehmen kann.

Die benötigten Projektile können in einfacher und kostengünstiger Weise (z. B. durch Spritzgießen) hergestellt werden.

Die gewünschte und angestrebte Veränderung des Außendurchmessers des Projektils kann als elastische oder auch plastische Verformung der Außenkontur durch gezielt gesteuerten bzw. geregelten Druck des Druckfluids bzw. der Schmelze erfolgen. Wird ein unter Druck verformbarer Kunststoff eingesetzt, wie z. B. ein Thermoplastisches Elastomer (TPE), beult sich der Mantel des Projektils unter Druck nach außen und folgt der Kontur des Formnestes.

Die Verformung des Projektils zur Anpassung an die Wanddicke des Formteils kann durch Druck, Temperatur und Zeit so gesteuert oder geregelt werden, dass der gewünschte Wanddickenverlauf über die Formteillänge erreicht wird.

Die Fixierung des Projektils auf der Einspritzdüse erfolgt in bekannter Weise. Das Projektil wird auf die Düse (Injektor) aufgesetzt und schließt die Fluid-Injektionsöffnung ab. Dadurch können einfach herzustellende und kostengünstige Fluid-Injektoren verwendet werden.

Um ein vorzeitiges Anschmelzen des Projektils durch die Schmelze während der Vorfüllung zu vermeiden, kann z. B. eine Kühlung des Projektils von innen durch die Fluidzuführdüse (Fluidinjektor) erfolgen. Nach dem Aufsetzen des Projektils bis zum Ende der Vorfüllung mit Schmelze kann z. B. mindestens zeitweise eine Kühlung durch den Fluidinjektor erfolgen. Mögliche diesbezügliche Lösungen hierzu sind aus der EP 1 366 882 B1 bekannt, auf die insoweit ausdrücklich Bezug genommen wird.

Während des Vordringens des Projektils durch den Hohlkörper erfolgt die Kühlung durch das Druckfluid.

Um ein vorzeitiges Anschmelzen des Projektils durch die Schmelze zu vermeiden, ist es auch möglich, das Projektil vor dem Aufsetzen auf den Fluidinjektor auf eine sehr niedrige Temperatur herunterzukühlen.

Zusätzlich zur Innenzentrierung auf der Einspritzdüse kann eine Außenzentrierung des Projektils im Werkzeug erfolgen, z. B. um das Projektil zunächst zusammenzudrücken.

Möglich ist es ferner, zunächst mit großen Außendurchmessern der Formteile zu beginnen, denen dann kleinere Durchmesser folgen.

Zum Einsatz kommt eine kleine und einfache, kostengünstige Injektionsdüse ohne Verschluss.

Die Kühlzeiten sind relativ kurz, da sich der Kunststoff sofort verfestigt (insbesondere bei Einsatz von Wasser als Fluid).

Das vorgeschlagene Verfahren kann grundsätzlich auch mit allen für die Fluidinjektionstechnik bekannten Verfahren, wie z.B. Teilfüllung, Überlauf und Masserückdrückverfahren (z. B. in den Schneckenvorraum), arbeiten. Es kann also auch mit der "full shot"-Technik (vollständige Füllung der Kavität) gearbeitet werden, wobei die überschüssige Kunststoffschmelze in eine Nebenkavität oder in den Schneckenvorraum wieder verdrängt wird.

In der Zeichnung sind Ausführungsbeispiele der Erfindung dargestellt. Es zeigen:
- Fig. 1: ein geschnitten dargestelltes, spritzgegossenes Formteil in Form einer Medienleitung in der Seitenansicht, das sich entlang einer Längsrichtung erstreckt,
- Fig. 2a: ein Projektil gemäß einer ersten Ausführungsform der Erfindung in der Seitenansicht, wobei es sich in einem Grundzustand befindet,
- Fig. 2b: das Projektil gemäß Fig. 2a, wobei es sich jetzt in einem aufgeweiteten Zustand befindet,
- Fig. 3: einen Abschnitt eines Formteils, bei dem das Projektil in zwei verschiedenen Prozesszuständen während des Spritzgießens ein-gezeichnet ist,
- Fig. 4a: ein Projektil gemäß einer zweiten Ausführungsform der Erfindung in der Seitenansicht, wobei es sich in einem Grundzustand befindet,
- Fig. 4b: das Projektil gemäß Fig. 4a, wobei es sich jetzt in einem auf-geweiteten Zustand befindet,
- Fig.5: einen Abschnitt eines Formteils, bei dem das Projektil in zwei verschiedenen Prozesszuständen während des Spritzgießens ein-gezeichnet ist,
- Fig. 6a: ein Projektil gemäß einer dritten Ausführungsform der Erfindung in der Seitenansicht, wobei es sich in einem Grundzustand befindet,
- Fig. 6b: das Projektil gemäß Fig. 6a, wobei es sich jetzt in einem auf-geweiteten Zustand befindet, und
- Fig. 7: ein geschnitten dargestelltes, spritzgegossenes Formteil in Form einer Medienleitung in der Seitenansicht, das sich entlang einer Längsrichtung erstreckt und an dem ein seitlicher Ast ansetzt, der durch das Gasinnendruckverfahren erzeugt wurde.

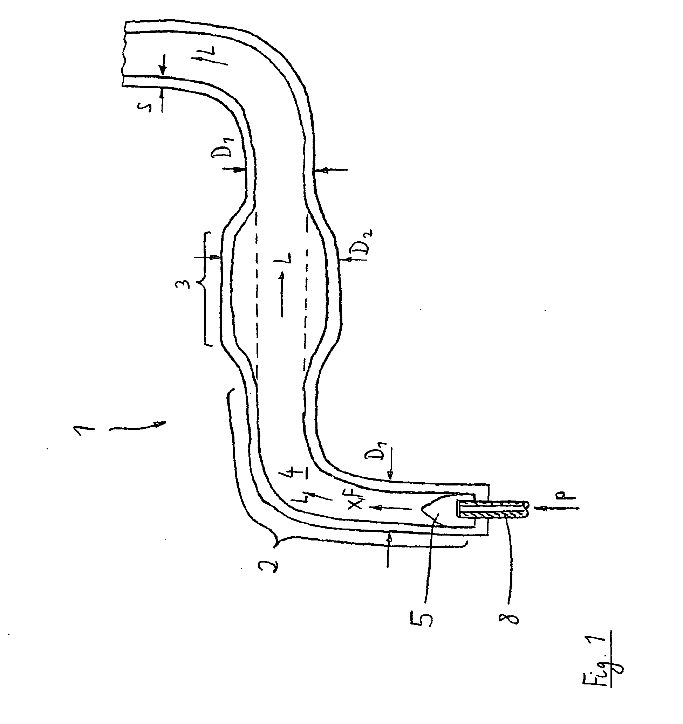

In Fig. 1 ist ein Formteil 1 dargestellt, das sich in Richtung einer Längsachse L erstreckt. Das Formteil 1 hat dabei verschiedene Abschnitte mit verschiedenen Außendurchmessern. Markiert ist ein Abschnitt 2 mit einem ersten Außendurchmesser D₁. In Richtung der Längsachse L folgt ein Abschnitt 3 mit einem Außendurchmesser D₂, der größer ist als der Außendurchmesser D₁. Im weiteren Verlauf schließt sich wieder ein Abschnitt mit dem Außendurchmesser D₁ an. Das Formteil 1 weist einen Hohlraum 4 auf. Dieser Hohlraum 4 ist durch das Projektilinjektions-Verfahren erzeugt. Dies ist in Fig. 1 dadurch angedeutet, dass das zum Einsatz kommende Projektil 5 in der Ausgangsposition dargestellt ist. Es ist auf einer Einspritzdüse 8 aufgesetzt, über die ein Fluid (z. B. Wasser oder Stickstoff) mit einem Druck p injiziert werden kann. Nach entsprechender Schmelzevorlage in die Werkzeugkavität des Spritzgießwerkzeugs wird durch Eingabe von Druckfluid über die Einspritzdüse 8 das Projektil 5 abgeschossen und in Förderrichtung F durch die Kavität getrieben. Der Vorschubweg ist mit x bezeichnet. Wesentlich ist, dass angestrebt wird, dass trotz des sich ändernden Außendurchmessers des Formteils 1 entlang der Längsachse eine möglichst konstante Wanddicke s eingehalten wird.

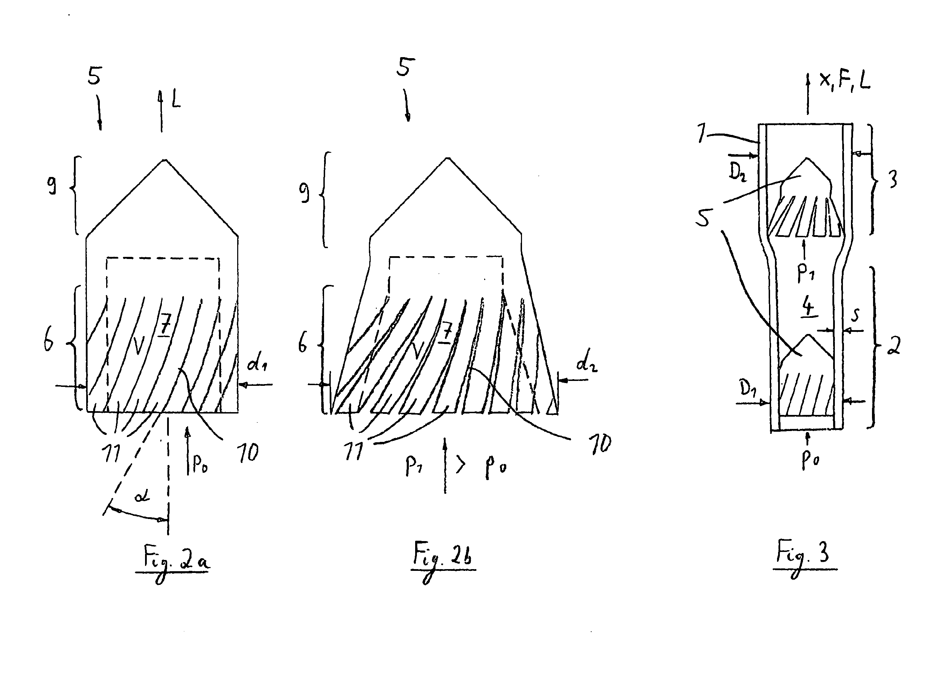

Erreicht wird dies im Ausführungsbeispiel mit einem Projektil 5, wie es in den Figuren 2a und 2b für zwei verschiedene Verfahrenszustände skizziert ist. Der Einsatz des Projektils 5 ist für zwei aufeinander folgende Prozesszustände in Fig. 3 dargestellt.

Demnach hat das Projektil 5 einen quasi unverformbaren Kopfbereich 9 in seinem in Förderrichtung F vorne liegenden Bereich. In dem in Förderrichtung F hinten liegenden Bereich ist indes ein elastischer Abschnitt 6 vorgesehen, der durch einen aufweitbaren Körper 10 realisiert wird. Dieser elastische Abschnitt 6 wird im Ausführungsbeispiel gemäß Fig. 2 durch eine Anzahl lamellenartig ausgebildeter Streifen 11 gebildet, die - in Richtung der Längsachse L gesehen - unter einem Winkel α verlaufen. Dieser Winkel beträgt im Ausführungsbeispiel ca. 20°.

Im Grundzustand gemäß Fig. 2a weist das Projektil 5 einen Außendurchmesser d₁ auf. Der Raum 7, der durch den aufweitbaren Körper 10 eingeschlossen wird, weist ein Volumen V auf.

Das Projektil 5 ist so ausgebildet, dass es seine äußere Form verändert, wenn der Fluiddruck, der über die Einspritzdüse 8 in den Hohlraum 4 aufgegeben wird, erhöht wird, wie es aus Fig. 2b hervorgeht. Der jetzt wirkende Druck p₁ ist höher als der Ausgangsdruck p₀ im Falle der Fig. 2a. Dies hat zur Folge, dass der Raum 7 sein Volumen V vergrößert; er wird durch den höheren Druck "aufgeblasen". Wie zu sehen ist, erhöht sich der Außendurchmesser des Projektils 5 auf den Wert d₂.

Angewendet auf den prozesstechnischen Einsatz bedeutet dies, dass zunächst mit einem ersten, geringeren Druck p₀ ein ersten Abschnitt 2 des Formteils 1 hergestellt werden kann, wie es aus Fig. 3, unten, ersichtlich ist. Das Formteil 1 hat hier den Außendurchmesser D₁ und eine entsprechende Wandstärke s. Wächst der Außendurchmesser des Formteils auf den Wert D₂ an, was im Abschnitt 3 des Formteils 1 der Fall ist (s. Fig. 3, oben), wird der Fluiddruck über die Einspritzdüse 8 auf einen höheren Wert P₁ erhöht (und/oder der Schmelzedruck entsprechend abgesenkt), so dass sich der Außendurchmesser des Projektils erhöht. Dies erfolgt in gesteuerter bzw. geregelter Weise derart, dass die Wanddicke s konstant gehalten wird.

Sollte sich der Außendurchmesser des Formteils entlang des Vorschubwegs x des Projektils 5 wieder verändern, kann durch Veränderung der Druck- und Viskositätsverhältnisse der Außendurchmesser des Projektils wieder angepasst werden.

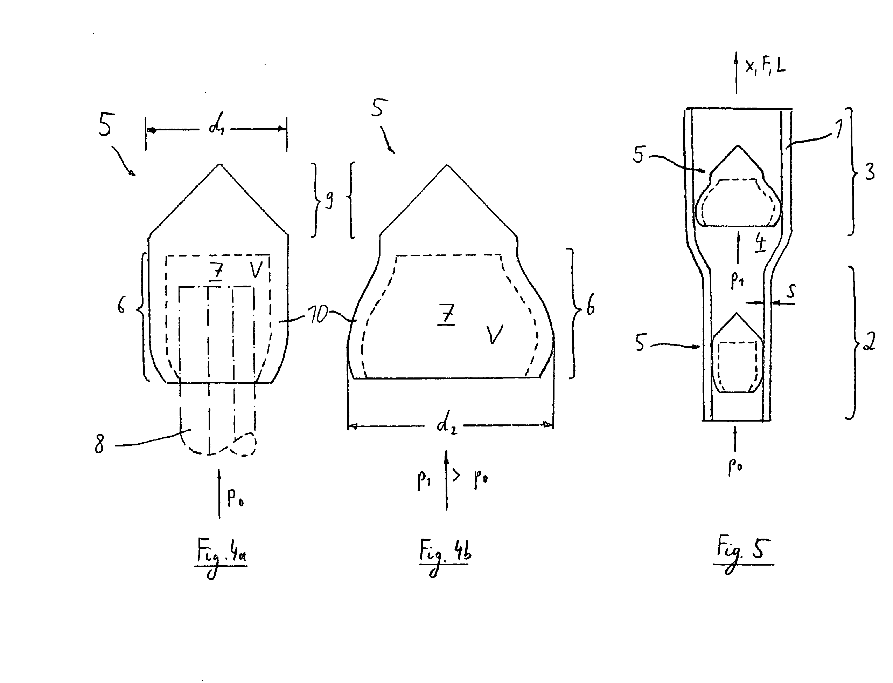

Eine analoge Situation ist im Falle des Ausführungsbeispiels gemäß Fig. 4a und 4b zu sehen; der Einsatz dieses Projektils 5 ist in Fig. 5 illustriert. Hier ist der elastische Abschnitt 6 des Projektils 5, d. h. der aufweitbare Körper 10, als hohlzylindrischer und zum axialen Ende hin etwas zugebogener Abschnitt ausgeführt, der eine hinreichend geringe Wandstärke hat, um sich bei Veränderung des Drucks (von einem niedrigeren Wert p₀ zu einem höheren Wert p₁) in der skizzierten Weise aufzudehnen. Demgemäß wächst der Außendurchmesser d₁ des Projektils 5 auf den höheren Wert d₂.

In Fig. 4a ist das Projektil 5 in dem Zustand skizziert, in dem es auf die gestrichelt dargestellte Einspritzdüse 8 aufgesetzt ist.

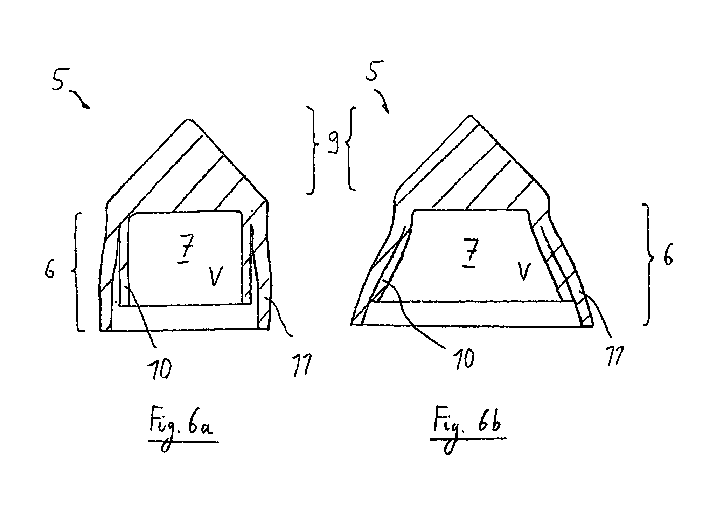

In Fig. 6a und 6b ist schließlich noch eine weitere Ausführungsform des Projektils 5 dargestellt. Hier ist der aufweitbare Körper 10 als hohlzylindrisches Teil mit geringer Wanddicke ausgebildet. Über dem Körper 10 sind lamellenartig ausgebildete Streifen 11 angeordnet. Demgemäß sind hier die Lösungen gemäß der Figuren 2 und 4 kombiniert worden. Wegen der größeren Wanddicke des Projektils wird dieses durch die Kunststoffschmelze nicht so stark erhitzt. Dennoch ist eine einfache Herstellungsmöglichkeit gegeben.

Die Wanddicke des inneren Körpers 10 ist so abgestimmt, dass sich dieser bei Druckbeaufschlagung leicht in der gewünschten Weise verformen, d. h. aufblähen lässt und damit die lamellenartigen Streifen 11 nach außen drücken kann. Nimmt der Fluiddruck wieder ab, bildet sich der Körper 10 zurück und lässt damit auch die lamellenartigen Streifen 11 sich wieder nach innen anlegen.

Möglich ist es auch, dass die Wanddicken des Körpers 10 partiell so verändert werden, dass die Durchmesserveränderung über dem Umfang nicht symmetrisch erfolgt. Dieses Prinzip gilt für alle beschriebenen Ausführungsformen der Projektile 5.

Die schräg angeordneten Lamellen (s. Winkel α in Fig. 2a) stellen auch im aufgespreizten Zustand in axialer Richtung sicher, dass die Lamellen so ineinandergreifen, dass die innere Formteiloberfläche kreisförmig ausgeräumt wird. Das Aufspreizen erfolgt infolge des Mediendrucks p bei der Fluideinspritzung in Relation zum Gegendruck durch die Kunststoffschmelze. Bei einer Verjüngung des Durchmessers werden die Lamellen wieder zusammengepresst, so dass die Wanddicke des rohrförmigen Formteils konstant bleibt.

Die Herstellung des vorgeschlagenen Projektils 5 mit Lamellen kann z. B. durch Spritzgießen mit gespreizten Lamellen zur leichteren Herstellung und Entformung geschehen. Die schrägen Lamellen können aber auch durch mechanische Bearbeitung nach dem Spritzgießen hergestellt werden.

Das Projektil 5 kann aus Kunststoff oder auch aus einem anderen Material hergestellt werden. Bevorzugt wird das Projektil allerdings aus Kunststoff hergestellt, wobei als geeignete Kunststoffe Thermoplastische Elastomere (TPE) unterschiedlicher Härte gewählt werden können. Andere geeignete Kunststofftypen sind z. B. PP und PE, aber auch PA und geeignete Blends.

Der Kunststoff, aus dem das Projektil 5 hergestellt wird, muss auf den Kunststoff des Formteils so abgestimmt werden, dass ein Anschmelzen bei der Vorfüllung mit Schmelze nicht stattfindet. Dies kann z. B. durch geeignete Maßnahmen wie Kühlung des Projektils während der Vorfüllung mit Schmelze oder wie durch Herunterkühlen des Projektils auf sehr tiefe Temperaturen vor dem Aufsetzen auf die Fluidzuführdüse erfolgen.

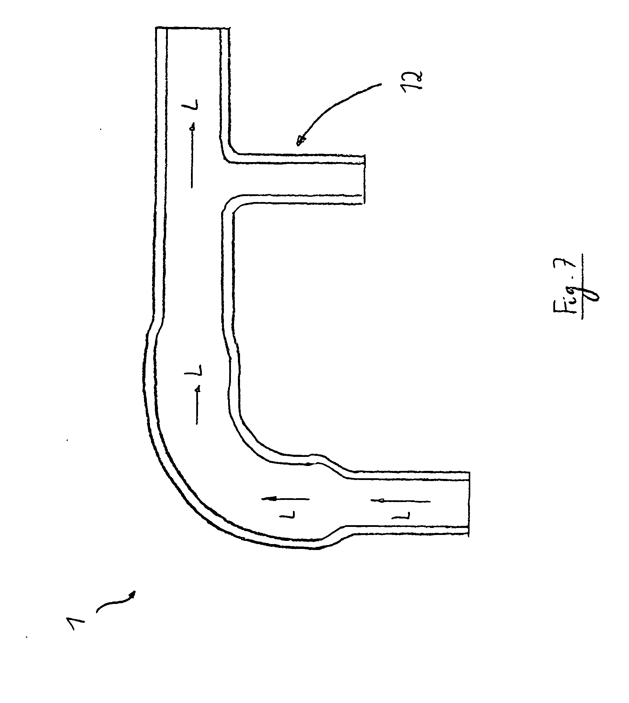

In Fig. 7 ist ein anderes Formteil skizziert, das mit dem vorgeschlagenen Verfahren gefertigt wurde. Anzumerken ist hier, dass ein hohler Abzweig 12 vorhanden ist, der entweder mechanisch oder durch Fluidinjektion erzeugt werden kann.

### Bezugszeichenliste:

- 1: Formteil
- 2: Abschnitt des Formteils
- 3: Abschnitt des Formteils
- 4: Hohlraum
- 5: Projektil
- 6: elastischer / plastischer Abschnitt
- 7: Raum
- 8: Einspritzdüse für Druckfluid
- 9: Kopfbereich
- 10: aufweitbarer Körper
- 11: lamellenartig ausgebildeter Streifen
- 12: Abzweig

- D₁: Außendurchmesser des Formteils
- D₂: Außendurchmesser des Formteils
- d₁: Außendurchmesser des Projektils
- d₂: Außendurchmesser des Projektils
- x: Vorschubweg
- s: Wanddicke
- p: Fluiddruck
- V: Volumen
- L: Längsachse
- F: Förderrichtung
- α: Winkel

## Patentansprüche

1. Verfahren zum Spritzgießen eines Formteils (1), das mindestens zwei im Außendurchmesser (D₁, D₂) unterschiedliche Abschnitte (2, 3) aufweist, wobei ein sich im Inneren des Formteils (1) befindlicher Hohlraum (4) erzeugt wird, indem ein Projektil (5) in Richtung einer Längsachse (L) des Formteils (1) durch das noch schmelzflüssige spritzgießfähige Material in eine Förderrichtung (F) getrieben wird, wozu im sich in Förderrichtung (F) hinter dem Projektil (5) befindlichen Hohlraum (4) ein Druckfluid aufgegeben wird, das das Projektil (5) in Förderrichtung (F) vorantreibt,
**dadurch gekennzeichnet, dass**
ein Projektil (5) verwendet wird, das zumindest einen elastischen oder plastischen Abschnitt (6) aufweist, der von einem Raum (7) begrenzt wird, in den das Druckfluid beim Vorantreiben des Projektils (5) eintreten kann, wobei sich das Volumen (V) des Raums (7) und damit der wirksame Außendurchmesser (d₁, d₂) des Projektils (5) in Abhängigkeit des Fluiddrucks (p) verändern kann,
wobei der Druck (p) des Druckfluids und/oder der Druck in der Schmelze oder eine von den Drücken abhängige Prozessgröße so gesteuert oder geregelt werden, dass sich der Raum (7) und damit der wirksame Außendurchmesser (d₁, d₂) des Projektils (5) so vergrößert und/oder verringert, dass der wirksame Außendurchmesser (d₁, d₂) des Projektils (5) über dem Vorschubweg (x) in Förderrichtung (F) zumindest abschnittsweise einen vorgegebenen Wert annimmt.

2. Verfahren nach Anspruch 1, **dadurch gekennzeichnet, dass** der Druck (p) des Druckfluids oder eine vom Druck (p) abhängige Prozessgröße so gesteuert oder geregelt werden, dass die Wanddicke (s) des Formteils (1) über der Längsachse (L) des Formteils (1) einen vorgegebenen Verlauf hat.

3. Verfahren nach Anspruch 2, **dadurch gekennzeichnet, dass** der Druck (p) des Druckfluids oder eine vom Druck (p) abhängige Prozessgröße so gesteuert oder geregelt werden, dass die Wanddicke (s) des Formteils (1) über der Längsachse (L) des Formteils (1) konstant ist.

4. Vorrichtung zum Spritzgießen eines Formteils (1), das mindestens zwei im Außendurchmesser (D₁, D₂) unterschiedliche Abschnitte (2, 3) aufweist, wobei sich im Inneren des Formteils (1) ein Hohlraum (4) befindet, die ein mindestens zweiteiliges Spritzgießwerkzeug sowie mindestens eine Einspritzdüse (8) für ein Druckfluid in die Kavität des Spritzgießwerkzeugs aufweist, wobei die Vorrichtung mindestens ein auf die Einspritzdüse (8) aufsetzbares Projektil (5) umfasst, das durch Aufgabe des Druckfluids durch die sich in der Kavität des Spritzgießwerkzeugs befindliche Schmelze bewegt werden kann, wobei die Vorrichtung zur Durchführung des Verfahrens nach einem der Ansprüche 1 bis 3 vorgesehen ist,
**dadurch gekennzeichnet, dass**
das Projektil (5) einen in Förderrichtung (F) vorne liegenden Kopfbereich (9) und einen in Förderrichtung (F) hinten liegenden im Volumen (V) veränderlichen Raum (7) aufweist, wobei der Raum (7) fluidisch mit dem Hohlraum (4) in Verbindung steht.

5. Vorrichtung nach Anspruch 4, **dadurch gekennzeichnet, dass** der Raum (7) durch einen dünnwandigen, blasenartig aufweitbaren Körper (10) begrenzt wird.

6. Vorrichtung nach Anspruch 4, **dadurch gekennzeichnet, dass** der Raum (7) zumindest teilweise durch eine Anzahl lamellenartig ausgebildeter Streifen (11) begrenzt wird.

7. Vorrichtung nach Anspruch 6, **dadurch gekennzeichnet, dass** die lamellenartigen Streifen (11) zur Förderrichtung (F) unter einem Winkel (α) angeordnet sind.

8. Vorrichtung nach Anspruch 4, **dadurch gekennzeichnet, dass** der Raum (7) durch einen dünnwandigen, blasenartig aufweitbaren Körper (10) begrenzt wird, wobei auf der Außenseite des Körpers (10) eine Anzahl lamellenartig ausgebildeter Streifen (11) angeordnet sind.

9. Vorrichtung nach einem der Ansprüche 6 bis 8, **dadurch gekennzeichnet, dass** die lamellenartigen Streifen (11) durch einen mechanischen Fertigungsvorgang, insbesondere durch einen Schneidevorgang, erzeugt sind.

10. Vorrichtung nach einem der Ansprüche 4 bis 9, **dadurch gekennzeichnet, dass** das Projektil (5) als Kunststoff-Spritzgießteil hergestellt ist, wobei es insbesondere aus thermoplastischem Elastomer (TPE), aus Polypropylen (PP), aus Polyethylen (PE) oder aus Polyamid (PA) besteht.

## Claims

1. Method for injection moulding of a moulded part (1), which has at least two different sections (2, 3) being different in the outer diameter (D₁, D₂), wherein a void (4) is produced in the inner of the moulded part (1) by causing a projectile (5) in the direction of a longitudinal axis (L) of the moulded part (1) through the still molten injection mouldable material in a direction of flow (F), whereto a pressurized fluid is exerted in the void (4) in the direction of flow (F) behind the projectile (5) which moves the projectile (5) into the direction of flow (F),
**characterized in that**
a projectile (5) is used which comprises at least one elastic or plastic section (6), which section (6) is delimited by a space (7) in which the pressurized fluid can enter when causing the projectile (5) to move, wherein the volume (V) of the space (7) and for this reason the effective outer diameter (d₁, d₂) of the projectile (5) can be changed in dependency of the fluid pressure (p),
wherein the pressure (p) of the pressurized fluid and/or the pressure in the melt or a process factor being dependent from the pressures is controlled or feed-back controlled in such a manner that the space (7) and for this reason the effective outer diameter (d₁, d₂) of the projectile (5) is enlarged and/or reduced in such a way that the effective outer diameter (d₁, d₂) of the projectile (5) has a predetermined value at least in sections along the feeding path (x) in the direction of flow (F).

2. Method according to claim 1, **characterized in that** the pressure (p) of the pressurized fluid or a process factor being dependent from the pressure (p) is controlled or feed-back controlled in such a manner that the wall thickness (s) of the moulded part (1) has a predetermined value along the longitudinal axis (L) of the moulded part (1).

3. Method according to claim 2, **characterized in that** the pressure (p) of the pressurized fluid or a process factor being dependent from the pressure (p) is controlled or feed-back controlled in such a manner that the wall thickness (s) of the moulded part (1) is constant along the longitudinal axis (L) of the moulded part (1).

4. Apparatus for injection moulding of a moulded part (1), which moulded part (1) has at least two different sections (2, 3) being different in the outer diameter (D₁, D₂), wherein a void (4) is arranged in the inner of the moulded part (1), which apparatus has an at least two-part injection moulding tool and at least one injection nozzle (8) for injecting pressurized fluid into the cavity of the injection moulding tool, wherein the apparatus comprises at least one projectile (5) which can be put onto the injection nozzle (8), which can be moved by exerting the pressurized fluid through the melt being located in the cavity of the injection moulding tool, wherein the apparatus is used for carrying out the method according to one of claims 1 to 3,
**characterized in that**
the projectile (5) comprises a head region (9) being arranged in the front seen in the direction of flow (F) and a space (7) which volume is changeable and being arranged in the rear seen in the direction of flow (F), wherein the space (7) is in fluidic connection with the void (4).

5. Apparatus according to claim 4, **characterized in that** the space (7) is delimited by a thin walled, bladder-like expandable body (10).

6. Apparatus according to claim 4, **characterized in that** the space (7) is delimited at least partially by a plurality of lamella-shaped strips (11).

7. Apparatus according to claim 6, **characterized in that** the lamella-shaped strips (11) are arranged to the direction of flow (F) under an angle (α).

8. Apparatus according to claim 4, **characterized in that** the space (7) is delimited by a thin walled, bladder-like expandable body (10), wherein a plurality of lamella-shaped strips (11) are arranged at the outer side of the body (10).

9. Apparatus according to one of claims 6 to 8, **characterized in that** the lamella-shaped strips (11) are produced by a mechanical production process, especially by a cutting process.

10. Apparatus according to one of claims 4 to 9, **characterized in that** the projectile (5) is an injection moulded part, wherein it consists especially of thermoplastic elastomere (TPE), of polypropylene (PP), of polyethylene (PE) or of polyamide (PA).

## Revendications

1. Procédé de moulage par injection d'une pièce de forme (1), qui présente au moins deux sections (2, 3) de diamètres extérieurs différents (D₁, D₂), dans lequel on produit une cavité (4) se trouvant à l'intérieur de la pièce de forme (1), en déplaçant un projectile (5) dans une direction de transport (F) dans la direction d'un axe longitudinal (L) de la pièce de forme (1) à travers la matière injectable encore fondue, opération pour laquelle on introduit dans la cavité (4) se trouvant derrière le projectile (5) dans la direction de transport (F) un fluide sous pression, qui propulse le projectile (5) dans la direction de transport (F), **caractérisé en ce que** l'on utilise un projectile (5), qui présente au moins une section élastique ou plastique (6), qui est limitée par un espace (7) dans lequel le fluide sous pression peut pénétrer lors de la propulsion du projectile (5), dans lequel le volume (V) de l'espace (7) et de ce fait le diamètre extérieur utile (d₁, d₂) du projectile (5) peut changer en fonction de la pression du fluide (p), dans lequel la pression (p) du fluide sous pression et/ou la pression dans le bain fondu ou une grandeur du processus dépendant des pressions peut être commandée ou régulée de telle manière que l'espace (7) et de ce fait le diamètre extérieur utile (d₁, d₂) du projectile (5) soit augmenté et/ou diminué de telle manière que le diamètre extérieur utile (d₁, d₂) du projectile (5) prenne au moins localement une valeur prédéterminée sur son parcours (x) dans la direction de transport (F).

2. Procédé selon la revendication 1, **caractérisé en ce que** la pression (p) du fluide sous pression ou une grandeur du processus dépendant de la pression (p) est commandée ou régulée de telle manière que l'épaisseur de paroi (s) de la pièce de forme (1) présente une évolution prédéterminée suivant l'axe longitudinal (L) de la pièce de forme (1).

3. Procédé selon la revendication 2, **caractérisé en ce que** la pression (p) du fluide sous pression ou une grandeur du processus dépendant de la pression (p) est commandée ou régulée de telle manière que l'épaisseur de paroi (s) de la pièce de forme (1) soit constante suivant l'axe longitudinal (L) de la pièce de forme (1) .

4. Dispositif destiné au moulage par injection d'une pièce de forme (1), qui présente au moins deux sections (2, 3) de diamètres extérieurs différents (D₁, D₂), dans lequel il se trouve à l'intérieur de la pièce de forme (1) une cavité (4), dispositif qui présente un outil de moulage par injection en au moins deux parties ainsi qu'au moins une buse d'injection (8) pour un fluide sous pression dans la cavité de l'outil de moulage par injection, dans lequel le dispositif comprend au moins un projectile (5) applicable sur la buse d'injection (8), qui peut être déplacé par l'application du fluide sous pression à travers le bain fondu se trouvant dans la cavité de l'outil de moulage par injection, dans lequel le dispositif est prévu pour la mise en oeuvre du procédé selon l'une quelconque des revendications 1 à 3, **caractérisé en ce que** le projectile (5) présente une zone de tête (9) située en avant dans la direction de transport (F) et un espace (7) de volume (V) variable situé derrière dans la direction de transport (F), dans lequel l'espace (7) est en communication fluidique avec la cavité (4).

5. Dispositif selon la revendication 4, **caractérisé en ce que** l'espace (7) est limité par un corps (10) à paroi mince dilatable à la manière d'une bulle.

6. Dispositif selon la revendication 4, **caractérisé en ce que** l'espace (7) est limité au moines partiellement par plusieurs bandelettes (11) en forme de lamelles.

7. Dispositif selon la revendication 6, **caractérisé en ce que** les bandelettes en forme de lamelles (11) sont disposées sous un angle (α) par rapport à la direction de transport (F).

8. Dispositif selon la revendication 4, **caractérisé en ce que** l'espace (7) est limité par un corps (10) à paroi mince, dilatable à la manière d'une bulle, dans lequel plusieurs bandelettes en forme de lamelles (11) sont disposées sur le côté extérieur du corps (10).

9. Dispositif selon l'une quelconque des revendications 6 à 8, **caractérisé en ce que** les bandelettes en forme de lamelles (11) sont produites par une opération de fabrication mécanique, en particulier par une opération de coupe.

10. Dispositif selon l'une quelconque des revendications 4 à 9, **caractérisé en ce que** le projectile (5) est fabriqué sous la forme d'une pièce moulée par injection en matière plastique, dans lequel elle est composée en particulier d'un élastomère thermoplastique (ETP), de polypropylène (PP), de polyéthylène (PE) ou de polyamide (PA).
